# EUROPEAN PATENT SPECIFICATION

(11) **EP 0 790 032 B1**
(45) Date of publication and mention of the grant of the patent: **28.05.2003**
(21) Application number: 97300378.3
(22) Date of filing: 21.01.1997
(51) Int. Cl.: A47L 13/58, A47J 47/18

(54) **Cleaning equipment**
Reinigungsvorrichtung
Dispositif de nettoyage

(30) Priority: 16.02.1996 GB 9603279
(43) Date of publication of application: 20.08.1997
(73) Proprietor: SCOT YOUNG RESEARCH LIMITED, Stourbridge, West Midlands DY9 8HG (GB)
(72) Inventor: Young, Scot, Grand Valley, Toronto LON IGO (CA)
(74) Representative: Higgins, Michael Roger

(56) References cited:
- EP-A- 0 311 360
- GB-A- 450 798
- GB-A- 1 520 839
- GB-A- 2 239 388
- GB-A- 2 260 691
- US-A- 4 344 201

## Description

The invention relates to cleaning equipment in which cleaning liquid is taken from a container, for example a bucket, and returned thereto after it has been used for dirt removal. It is of particular, but by no means exclusive, application to a cleaning bucket for use with a cleaning element or device, such as a floor mop, cleaning cloth or chamois leather which is repeatedly wrung out into the bucket.

A problem with such cleaning equipment is that dirt deposited out from the liquid collects at the bottom of the container and that disturbance of the liquid, as when rinsing out a mop for example, washes the collected dirt back into the main body of the liquid. In addition, a cleaning element such as a mop can pick up the collected dirt directly. Because of this the container is often emptied and cleaned out before the cleaning additives in the liquid are actually exhausted.

GB-A-2239388 discloses cleaning equipment comprising a container with a lower region in which in use there is positioned an element of mat or pad-like form adapted to receive dirt settling under gravity from cleaning liquid in the container. A grid, grill or other apertured member, through which the dirt settling out from the cleaning liquid can pass into the mat or pad, is positioned above the lower region.

According to the present invention there is provided cleaning equipment comprising a container for cleaning liquid and a dirt trap adapted to be supported in the container and submerged in cleaning liquid contained in the container, the dirt trap comprising a dirt receiving element for receiving dirt settling under gravity from the contained liquid with the dirt collecting in, or passing through so as to be trapped below, the element characterised in that the dirt trap is supportable in the container in spaced relationship to the base of the container and further comprises a rigid or substantially rigid perforated structure above and below the dirt receiving element.

Preferably, the form and structure of the dirt receiving element are such that disturbance of the liquid in the container cannot wash the collected dirt back out from or through the element to any significant extent. The dirt receiving element is, preferably, a three-dimensional fibrous mesh structure and may comprise a mat or pad of superposed mesh layers or may be a non-woven unitary mesh comprising a "jumble" of interlocking or bonded fibres.

Preferably, the dirt receiving element is a reusable unit which can be replaced in the container after removal therefrom and washing out of the collected dirt.

Preferably, the support structure is of unitary construction having upper and lower parts and a slot therebetween for removably receiving the dirt receiving element.

Preferably, the support structure is of grid-like form.

Preferably, the container is a cleaning bucket for use with a hand-held cleaning element or device, such as a mop.

The support structure protects the dirt receiving element. The combination of the support structure and dirt receiving element blocks turbulence and prevents dirt from being stirred up at the foot of the container. Also, powders used for cleaning can be placed in self dissolving packets beneath the support structure and the support structure and dirt receiving element will prevent any residue of the packets from coming into contact with a mophead or other cleaning element.

The invention will now be more particularly described, by way of example, with reference to the accompanying diagrammatic drawing which illustrates, in vertical cross-section, a cleaning bucket provided with a dirt-receiving element and a grid-like structure according to the invention.

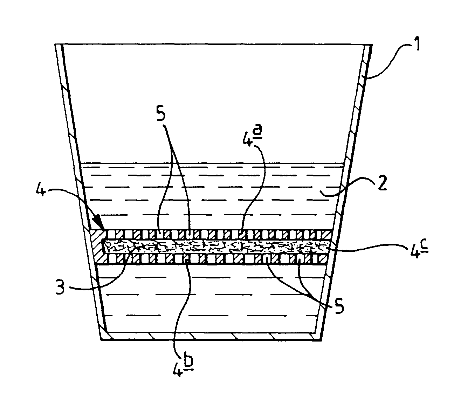

Referring to the drawing, the bucket 1 contains a cleaning liquid 2 for use in a cleaning operation, for example a floor mopping operation. A dirt trap is provided by a dirt-receiving mat element 3 supported by a grid-like structure 4.

The element 3 is a three dimensional fibrous mesh structure and may comprise a mat or pad of superposed mesh layers or may be a non-woven unitary mesh comprising a "jumble" of interlocking or bonded fibres. The form of the element 3 is such that disturbances in the liquid 2 cannot wash back out into the body of liquid 2, to any material extent, dirt particles deposited from the liquid 2 and which settle into the inter-fibre spaces of the element 3 or which pass therethrough so as to be trapped below the element 3. The dirt passing through the element 3 could be collected in a dish or container (not shown) which could be removed for cleaning purposes and emptied.

The grid-like structure 4 is of rigid or substantially rigid material, typically a plastics material, and is, preferably, of unitary construction having upper and lower parts 4a and 4b, respectively, and a slot 4c therebetween for receiving the dirt receiving element 3.

The grid-like structure 4 is supported in the bucket 1 in spaced relationship to the base of the bucket. This may be by way of an interference fit with the walls of the bucket or it may be supported on an annular ledge within the bucket.

Holes 5 in the upper and lower parts of the grid-like structure 4 may, as shown, be tapered in a downwardly direction and, in this case, the holes may be of truncated pyramidical shape.

The dirt receiving element 3 is a re-usable unit which can be replaced in the grid-like structure 4 after removal therefrom and washing out of the collected dirt.

The dirt receiving element can be produced in several "grades" to allow either fine or both fine and coarse dirt to pass therethrough.

The grid-like structure 4 protects the dirt receiving element 3 and in combination with the dirt receiving element 3 acts as a "turbulence blocker" and ensures that dirt trapped below the dirt receiving element 3 is left undisturbed by turbulence above the grid-like structure.

Also, powders used for cleaning can be placed in self dissolving packets beneath the grid-like structure 4 and the grid-like structure and dirt receiving element will prevent any residue of the packets from coming into contact with a mophead or other cleaning element. This prevents any substance being transferred from the mop to the floor where it would have caused an unsightly or unsafe film or residue to result.

The powdered chemical can be any powdered cleaner or disinfectant. Powdered chemicals are more environmentally friendly than liquid chemicals as the film packet containing the chemical dissolves. Also, an exact measure can be provided thereby preventing excessive use of the chemical.

The embodiment described above is given by way of example only and various modifications will be apparent to persons skilled in the art without departing from the scope of the invention as defined by the appended claims. For example, the grid-like structure 4 could be in two separate parts and the holes in the grid-like structure could be of other appropriate shape. Also, the dirt receiving element 3 could be of open-cell foam material.

## Claims

1. Cleaning equipment comprising a container (1) for cleaning liquid and a dirt trap adapted to be supported in the container and submerged in cleaning liquid contained in the container, the dirt trap comprising a dirt receiving element (3) for receiving dirt settling under gravity from the contained liquid (2) with the dirt collecting in, or passing through so as to be trapped below, the element **characterised in that** the dirt trap is supportable in the container in spaced relationship to the base of the container and further comprises a rigid or substantially rigid perforated structure (4) above and below the dirt receiving element.

2. Cleaning equipment as claimed in Claim 1, wherein the form and structure of the dirt receiving element (3) are such that disturbance of the liquid in the container cannot wash the collected dirt back out from or through the element (3) to any significant extent.

3. Cleaning equipment as claimed in Claim 1 or Claim 2, wherein the dirt receiving element (3) is a three-dimensional fibrous mesh structure.

4. Cleaning equipment as claimed in Claim 3, wherein the dirt receiving element (3) comprises a mat or pad of superposed mesh layers.

5. Cleaning equipment as claimed in Claim 3, wherein the dirt receiving element (3) is a non-woven unitary mesh comprising a "jumble" of interlocking or bonded fibres.

6. Cleaning equipment as claimed in any one of the preceding claims, wherein the dirt receiving element (3) is a reusable unit which can be replaced in the container (1) after removal therefrom and washing out of the collective dirt.

7. Cleaning equipment as claimed in any one of the preceding claims, wherein the support structure (4) is of unitary construction having upper and lower parts (4a and 4b) and a slot (4c) therebetween for removably receiving the dirt receiving element.

8. Cleaning equipment as claimed in any one of the preceding claims, wherein the support structure (4) is of grid-like form.

9. Cleaning equipment as claimed in Claim 8, wherein holes (5) in the grid-like support structure are tapered in a downwardly direction.

10. Cleaning equipment as claimed in any one of the preceding claims, wherein the container (1) is a cleaning bucket for use with a hand-held cleaning element or device.

## Patentansprüche

1. Reinigungsvorrichtung mit einem Behälter (1) für eine Reinigungsflüssigkeit und mit einem Schmutzabscheider, der so angepasst ist, dass er in dem Behälter gehalten werden kann und in die in dem Behälter enthaltene Reinigungsflüssigkeit eingetaucht werden kann, wobei der Schmutzabscheider ein den Schmutz aufnehmendes Element (3) enthält, um den sich unter der Schwerkraft aus der in dem Behälter enthaltenen Flüssigkeit (2) absetzenden Schmutz aufzunehmen, wobei sich der Schmutz in dem Element sammelt oder durch dasselbe hindurchtritt, um unter demselben aufgefangen zu werden, Element das **dadurch gekennzeichnet ist, dass** der Schmutzabscheider in dem Behälter in einem Abstand zu dem Boden des Behälters gehalten werden kann und dass derselbe ferner eine starre oder im Wesentlichen starre, durchlöcherte Struktur (4) oberhalb und unterhalb des den Schmutz aufnehmenden Elementes aufweist.

2. Reinigungsvorrichtung gemäss Anspruch 1, bei welcher die Form und die Struktur des den Schmutz aufnehmenden Elementes (3) derart sind, dass eine Störung der Flüssigkeit in dem Behälter den gesammelten Schmutz nicht in irgendeinem bedeutenden Ausmaß zurück aus dem Element (3) herauswaschen kann oder durch dasselbe hindurchwaschen kann.

3. Reinigungsvorrichtung gemäss Anspruch 1 oder 2, bei welcher das den Schmutz aufnehrnende Element (3) eine dreidimensionale faserige Maschenstruktur aufweist.

4. Reinigungsvorrichtung gemäss Anspruch 3, bei welcher das den Schmutz aufnehmende Element (3) eine Matte oder ein Kissen aus übereinander gelagerten Maschenschichten enthält.

5. Reinigungsvorrichtung gemäss Anspruch 3, bei welcher das den Schmutz aufnehrnende Element (3) eine nicht gewebte unitäre Masche ist, die aus einer ungeordneten Einheit ("jumble") von ineinander verhakten oder miteinander verbundenen Fasern besteht.

6. Reinigungsvorrichtung gemäss irgendeinem der vorhergehenden Ansprüche, bei welcher das den Schmutz aufnehmende Element (3) eine wiederverwendbare Einheit ist, die in dem Behälter (1) ersetzt werden kann, nachdem sie aus dem Behälter entfernt worden ist und der gesammelte Schmutz aus ihr herausgewaschen worden ist.

7. Reinigungsvorrichtung gemäss irgendeinem der vorhergehenden Ansprüche, bei welcher die Tragstruktur (4) von einer unitären Konstruktion ist, die obere und untere Teile (4a und 4b) aufweist und dazwischen einem Schlitz (4c) enthält, um das den Schmutz aufnehmende Element auf eine wieder entfernbare Weise aufzunehmen.

8. Reinigungsvorrichtung gemäss irgendeinem der vorhergehenden Ansprüche, bei welcher die Tragstruktur (4) eine gitterähnliche Form aufweist.

9. Reinigungsvorrichtung gemäss Anspruch 8, bei welcher Löcher (5) in der gitterähnlichen Tragstruktur eine Verjüngung in der nach unten verlaufenden Richtung aufweisen.

10. Reinigungsvorrichtung gemäss irgendeinem der vorhergehenden Ansprüche, bei welcher der Behälter (1) ein Reinigungseimer ist, den man in einem in der Hand gehaltenen Element oder Gerät verwendet.

## Revendications

1. Dispositif de nettoyage comprenant un récipient (1) du liquide de nettoyage et un piège à saletés destiné à être supporté dans le récipient et à être immergé dans le liquide de nettoyage contenu dans le récipient, le piège à saletés comprenant un élément de réception des saletés (3) destiné à recevoir les saletés déposées par gravité à partir du liquide contenu (2), les saletés y étant collectées ou le traversant de sorte à être piégées au-dessous, l'élément étant **caractérisé en ce que** le piège à saletés peut être supporté dans le récipient de manière espacée par rapport à la base du récipient et **en ce qu'**il a en outre une structure perforée rigide ou pratiquement rigide (4) au-dessus et au-dessous de l'élément de réception des saletés.

2. Dispositif de nettoyage selon la revendication 1, dans lequel la forme et la structure de l'élément de réception des saletés (3) sont telles que les perturbations du liquide dans le récipient ne peuvent pas entraîner par lavage une quelconque quantité notable de saletés collectées hors de l'élément (3) ou à travers celui-ci.

3. Dispositif de nettoyage selon les revendications 1 ou 2, dans lequel l'élément de réception des saletés (3) est constitué par une structure maillée fibreuse tridimensionnelle.

4. Dispositif de nettoyage selon la revendication 3, dans lequel l'élément de réception des saletés (3) comprend un mat ou un tampon de couches de maille superposées.

5. Dispositif de nettoyage selon la revendication 3, dans lequel l'élément de réception des saletés (3) est constitué par une maille non tissée d'une seule pièce comprenant un « tas» de fibres entrelacées ou liées.

6. Dispositif de nettoyage selon l'une quelconque des revendications précédentes, dans lequel l'élément de réception des saletés (3) est une unité réutilisable pouvant être remise dans le récipient (1) après son enlèvement correspondant et l'élimination par lavage des saletés collectées.

7. Dispositif de nettoyage selon l'une quelconque des revendications précédentes, dans lequel la structure de support (4) est constituée par une construction d'une seule pièce comportant des parties supérieure et inférieure (4a et 4b) et une fente (4c) entre elles destinée à recevoir de manière amovible l'élément de réception des saletés.

8. Dispositif de nettoyage selon l'une quelconque des revendications précédentes, dans lequel la structure de support (4) a une forme en tamis.

9. Dispositif de nettoyage selon la revendication 8 dans lequel des trous (5) dans la structure de support en forme de tamis sont effilés dans une direction allant vers le bas.

10. Dispositif de nettoyage selon l'une quelconque des revendications précédentes, dans lequel le récipient (1) et constitué par un seau de nettoyage destiné à être utilisé avec un élément ou un dispositif de nettoyage tenu à la main.
